# EUROPÄISCHE PATENTSCHRIFT

(11) **EP 0 849 520 B1**
(45) Veröffentlichungstag und Bekanntmachung des Hinweises auf die Patenterteilung: **13.02.2002**
(21) Anmeldenummer: 97120250.2
(22) Anmeldetag: 19.11.1997
(51) Int. Cl.: F16L 33/08

(54) **Schlauchschelle**
Hose clamp
Collier de serrage

(30) Priorität: 19.12.1996 DE 19653005
(43) Veröffentlichungstag der Anmeldung: 24.06.1998
(73) Patentinhaber: Hans Oetiker AG Maschinen- und Apparatefabrik, 8812 Horgen (CH)
(72) Erfinder: Allert, Kurt, 78727 Oberndorf A.N. (DE)
(74) Vertreter: Grosse, Rainer, Dipl.-Ing.

(56) Entgegenhaltungen:
- EP-A- 0 167 116
- DE-B- 1 249 030
- DE-B- 1 256 014
- DE-B- 2 854 675
- FR-A- 1 484 749
- US-A- 3 175 271

## Beschreibung

Die Erfindung betrifft eine Schlauchschelle mit einem U-förmigen Gehäuseunterteil, an dessen Boden ein Endbereich des Spannbandes befestigbar ist, und mit einem Gehäuseoberteil, das zum Ineingriff- oder Außereingriffbringen einer Spannschnecke mit dem anderen Endbereich des Spannbandes schwenkbar im Gehäuseunterteil gelagert ist, wobei die Spannschnecke im Gehäuseoberteil drehbar; jedoch axial im wesentlichen unverschiebbar gelagert ist und das Gehäuseoberteil einstückige Befestigungslappen aufweist, die in Ausnehmungen von Schenkel des U-förmigen Gehäuseunterteils bildenden Seitenwänden vom Innern des Gehäuseunterteils hier eingreifen beziehungsweise in Eingriff bringbar sind.

Eine derartige Schlauchschelle geht aus der europäischen Patentschrift 0 167 116 hervor. Die bekannte Ausführungsform ermöglicht es, das mit Spannschnekken versehene Gehäuseoberteil beim Montieren der Schlauchschelle aufzuklappen, so daß das Spannbandende auf einfache Weise und gewünschter Längenbemessung in das Gehäuseunterteil eingelegt werden kann. Anschließend wird dann das Gehäuseoberteil vollständig in das Gehäuseunterteil eingeschwenkt und in einer Endstellung arretiert. Sowohl das Verschwenken als auch das Arretieren erfolgt mittels vom Gehäuseoberteil einstückig ausgehenden Befestigungslappen, die in entsprechenden Ausnehmungen der Schenkel des U-förmigen Gehäuseunterteils schwenkbeweglich lagern beziehungsweise einbringbar sind, um die Endstellung zu verrasten. Will man eine bereits montierte und sich im Spannzustand befindliche Schlauchschelle wieder demontieren, so wird zunächst durch Drehen der Spannschnecke das Spannband gelockert und anschließend das Gehäuseoberteil relativ zum Gehäuseunterteil verschwenkt, wobei die Schneckengänge der Spannschnecke entsprechende Eingriffschlitze des zugehörigen Spannbands freigeben, so daß das Spannband aus dem Gehäuseunterteil herausgezogen und die Schlauchschelle entfernt werden kann. Die bekannte Schlauchschelle hat sich bewährt, wobei jedoch der Wunsch besteht, die Spannkräfte der bekannten Schlauchschelle noch weiter zu verbessern.

Der Erfindung liegt daher die Aufgabe zugrunde, eine Schlauchschelle der eingangs genannten Art anzugeben, die auf einfache Art und Weise montierbar und demontierbar ist, indem sie -wie vorstehend beschrieben- aufklappbar ausgestaltet ist und mit der sehr hohe Spannkräfte erzeugt werden können.

Diese Aufgabe wird erfindungsgemäß durch die Merkmale des Anspruchs 1 gelöst. Beim Gegenstand der Erfindung ist vorgesehen, daß zwei einander zur Drehachse diametral gegenüberliegende Befestigungslappen jeweils in eine der Ausnehmungen eingreifen, die als Winkelschlitze ausgebildet sind. Die Winkelschlitze erlauben es, zunächst das Gehäuseoberteil relativ zum Gehäuseunterteil in Richtung der Spannschnecken-Längserstreckung zu verschieben, wobei die Befestigungslappen innerhalb erster Schlitzabschnitte der Winkelschlitze verschoben werden, wobei die ersten Schlitzabschnitte etwa parallel zum Boden des Gehäuseunterteils verlaufen. Zum öffnen gelangen die Befestigungslappen anschließend in zweite Schlitzabschnitte der Winkelschlitze, die eine Schwenkbewegung des Gehäuseoberteils relativ zum Gehäuseunterteil gestatten. Die zweiten Schlitzabschnitte verlaufen quer, insbesondere rechtwinklig zu den ersten Schlitzabschnitten, wobei die zweiten Schlitzabschnitte sich in Richtung der freien Schenkelenden des U-förmigen Gehäuseunterteils erstrecken. Ferner greifen zwei weitere, einander hinsichtlich der Drehachse diametral gegenüberliegende Befestigungslappen jeweils in eine der Ausnehmungen ein, die als randoffene Ausnehmungen ausgebildet sind. Die randoffene Ausbildung dieser Ausnehmungen gestattet es, daß die zugehörigen Befestigungslappen aus den Ausnehmungen für ein Öffnen der Schlauchschelle austreten können beziehungsweise in die Ausnehmungen beim Schließen des Gehäuses einbringbar sind. Die randoffenen Ausnehmungen befinden sich in einem Stirnseitenbereich der Schenkel des U-förmigen Gehäuseunterteils. Ferner ist vorgesehen, daß das Gehäuseoberteil -im Querschnitt zur Spannschnecken-Längserstreckung gesehen- die Spannschnecke teilweise umschließt, und daß von Seitenränder des Gehäuseoberteils bildenden, zumindest etwa in Spannschnecken-Längserstreckung verlaufenden Endkanten der gebildeten Teilumschließungskontur die Befestigungslappen ausgehen. Durch diese Ausgestaltung ist ein Gehäuseoberteil geschaffen, das durch seine Einstückigkeit einfachst herstellbar ist, wobei eine extrem große Stabilität vorliegt. Diese resultiert daraus, daß die Teilumschließungskontur des Gehäuseoberteils die Spannschnecke entsprechend dem gewählten Teilumschließungswinkel übergreift und daß -einstückig von den Endkanten dieser Teilumschließungskontur ausgehend- die Befestigungslappen abstehen. Da die Endkanten in Spannschnecken-Längserstreckung verlaufen und von diesen Endkanten die Befestigungslappen quer, insbesondere senkrecht zu der Spannschnecken-Längserstreckung ausgehen und in entsprechende Ausnehmungen des Gehäuseunterteils eingreifen, sind die Befestigungslappen in Spannschnecken-Längserstreckung derart orientiert, daß ihre die Blechstärke des Gehäuseoberteils darstellenden Seitenflächen bei einer Kraftbeaufschlagung des Spannbands im Sinne einer Durchmesserverkleinerung des Spannumfangs gegen entsprechende Ausnehmungsrandflächen der erwähnten Ausnehmungen des Gehäuseunterteils treten. Mithin stützt sich das Gehäuseoberteil und damit die bei einer Spannbandbeaufschlagung die Kraft empfangende Spannschnecke nicht - wie im genannten Stand der Technik (EP 0 167 116)-in Richtung der Flächennormalen des Blechs, sondern quer dazu ab, was eine extrem große Kraftaufnahmefähigkeit garantiert, wobei es nur zu elastischen, allenfalls höchstens geringfügigen plastischen Verformungen der beteiligten Bauteile kommt. Von besonderer Bedeutung ist bei der erfindungsgemäßen Konstruktion, daß durch den Teilumschließungswinkel des Gehäuseoberteils um die Spannschnecke herum die erwähnten Befestigungslappen relativ nahe am Boden des Gehäuseunterteils gelegen sind, wobei an dem Boden ein Endbereich des Spannbands befestigt ist. Da der andere Endbereich an der Schnecke angreift, die die Kraft über das Gehäuseoberteil auf die Befestigungslappen überträgt, die wiederum die Kraft in das Gehäuseunterteil leiten, ist das sich so ausbildende Moment, aufgrund des geringen Abstandes und damit kleinen Hebelarms zwischen den Befestigungslappen und dem Gehäuseboden relativ klein. Auch dies verbessert entscheidend die Fähigkeit der erfindungsgemäßen Schlauchschelle, hohe Spannkräfte aufnehmen zu können. Trotz der mit klappbarem Gehäuse versehenen Bauform ist damit eine kostengünstige und einfach konstruierte Schlauchschelle geschaffen, die einen sehr tief liegenden Kraftangriffspunkt besitzt.

Vorzugsweise sind Gehäuseoberteil und Gehäuseunterteil im Stanz-/Biege-/ und/oder Prägeverfahren aus Blechmaterial hergestellt.

Nach einer Weiterbildung der Erfindung ist vorgesehen, daß die Teilumschließungskontur zumindest etwa der Umfangsquerschnittskontur der Spannschnecke in der Formgebung angepaßt ist. Diese Anpassung an die Formgebung der Spannschnecke, insbesondere an deren kreisförmigen Umfang, führt zu einer relativ kleinflächigen und somit gegen Torsions- und Biegekräften im wesentlichen resistenten Konstruktion, die die hohe Kraftaufnahmefähigkeit der Schlauchschelle fördert.

Ferner ist vorgesehen, daß die Befestigungslappen etwa auf der Höhe der Drehachse der Spannschnecke liegen. Diese relativ tiefliegende Anordnung der Befestigungslappen bewirkt die bereits vorstehend dargelegte Verkleinerung des Drehmoments, das die beiden Enden des Spannbands auf das Schlauchschellengehäuse ausüben. Wenn -gemäß vorstehender Formulierung- die Befestigungslappen "etwa" auf der Höhe der Drehachse liegen, so bedeutet dies, daß sie innerhalb eines Variationsbereichs liegen können, so daß sie sich auch etwas oberhalb oder auch unterhalb der Drehachse, also der Hälfte des Durchmessers der Spannschnecke, befinden, wobei das vorstehend genannte Drehmoment um so kleiner wird, je niedriger die Befestigungslappen liegen, also je näher ihre Position zum Boden des Gehäuseunterteils ist. Die Höhenposition der Befestigungslappen relativ zur Spannschnecke bestimmt den Umschließungswinkel, da bei sehr tiefliegenden Befestigungslappen ein entsprechend größerer Umschlingungswinkel des Gehäuseoberteils hinsichtlich der Spannschnekkenaufnahme realisiert wird.

Schließlich ist es vorteilhaft, daß der am Boden befestigbare Endbereich des Spannbands einen Schneckengang-Freilaufdurchbruch aufweist. Dieser Schneckengang-Freilaufdurchbruch erlaubt das Eingreifen der Gewindegänge der Spannschnecke, so daß die Gewindegänge sehr tief in Eingriffsschlitze des sich darüber befindenden anderen Bandendes eingreifen können, was ebenfalls die Kraftbeaufschlagungsfähigkeit der erfindungsgemäßen Schlauchschelle erhöht. Ferner erlaubt der Schneckengang-Freilaufdurchbruch ein besonders tiefes Anordnen der Spannschnecke, also besonders nahe am Boden des Gehäuseunterteils.

Die Zeichnungen veranschaulichen die Erfindung anhand eines Ausführungsbeispiels und zwar zeigt:
- Figur 1: eine Seitenansicht einer Schlauchschelle mit aufgeklapptem Gehäuseoberteil,
- Figur 2: eine Seitenansicht der Schlauchschelle mit arretiertem sich in Arbeitsstellung befindlichem Gehäuseoberteil,
- Figur 3: eine Draufsicht der in Figur 2 dargestellten Schlauchschelle und
- Figur 4: einen Querschnitt entlang der in Figur 3 dargestellten Linie IV-IV.

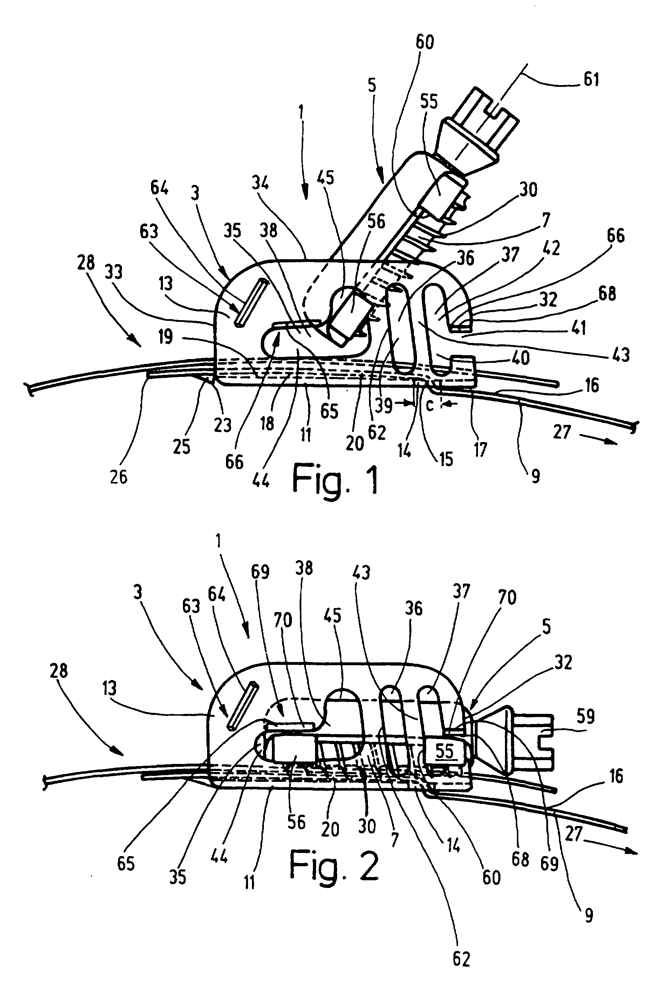

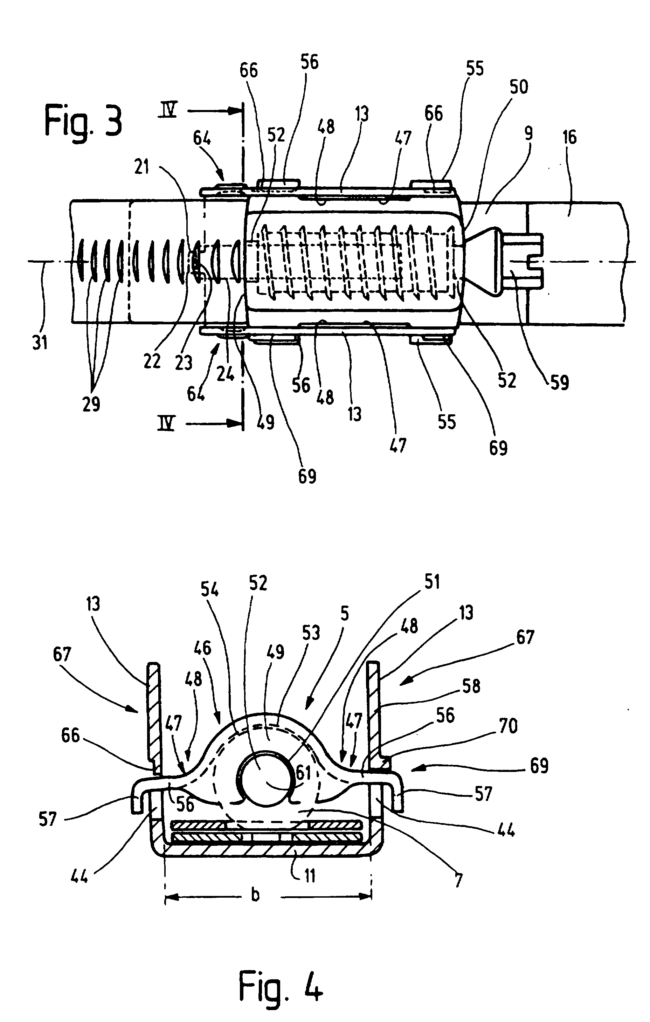

Die Figur 1 zeigt eine Schlauchschelle 1, die ein Gehäuseunterteil 3, ein Gehäuseoberteil 5, eine Spannschnecke 7 sowie ein Spannband 9 umfaßt. Das Gehäuseunterteil 3 besteht aus einem Gehäuseboden 11, von dem jeweils rechtwinklig abgebogene Seitenwände 13 ausgehen, so daß ein U-förmiges Gehäuseunterteil 3 gebildet ist (siehe insbesondere Figur 4). Das Gehäuseunterteil 3 ist somit einstückig ausgebildet.

Der Gehäuseboden 11 wird von einem Querschlitz 14 durchsetzt, der einen Durchbruch zur Aufnahme des Spannbands 9 bildet. Der Querschlitz 14 erstreckt sich, gemäß Figur 4, über die gesamte, innerhalb des U's liegende Breite b des Gehäusebodens 11. Die Schlitzbreite c (Figur 1) ist derart gewählt, daß ein Bereich des Spannbands 9, der eine Kröpfung 15 aufweist, aufgenommen werden kann, wobei die Oberseite 16 des Spannbands 9 an der Unterseite 17 des Gehäusebodens 11 anliegt und -im Innern des Gehäuseunterteils 3- die Unterseite 18 auf der Innenseite 19 des Gehäusebodens 11 aufliegt. Auf diese Art und Weise ist der eine Endbereich 20 des Spannbands 9 am Gehäuseunterteil 3 festgelegt. An dem dem Querschlitz 14 gegenüberliegenden Ende des Gehäusebodens 11 ist eine Sicherungszunge 21 einstükkig ausgebildet (Figur 3), die mit ihrem freien Ende 22 den Seitenrand eines Schneckengang-Freilaufdurchbruchs 24 übergreift. Der Schneckengang-Freilaufdurchbruch 24 ist in dem Bereich des Spannbands 9 ausgebildet, der innerhalb des Gehäuseunterteils 3 liegt. Vorzugsweise liegt die Sicherungszunge 21 in der Ebene des Gehäusebodens 11, so daß für den erwähnten Übergriff das Spannband 9 im Bereich des Seitenrands 23 nach unten ausgebogen ist (Bezugszeichen 25 in Figur 1). Mithin verläuft das Spannband 9, ausgehend von seinem einen Ende 26, durch das Innere des Gehäuseunterteils 3 hindurch, passiert mit der Kröpfung 15 den Querschlitz 14 und erstreckt sich dann -in Richtung des Pfeiles 27 (Figur 1)- um einen nicht dargestellten Gegenstand herum, wobei der andere Endbereich 28 im Bereich der Schlauchschelle 1 auf dem erstgenannten Endbereich 20 zu liegen kommt und dieser Endbereich 28 mit Eingriffsschlitzen 29 für den Schneckengang 30 der Spannschnecke 7 versehen ist.

Nachstehend wird auf die Schenkel des U-förmigen Gehäuseunterteils 3 bildende Seitenwände 13 näher eingegangen, wobei die beiden Seitenwände 13 hinsichtlich einer gedachten, senkrecht auf der Oberseite 16 des Bandes 9 stehenden Mittellängsebene 31 spiegelbildlich ausgebildet sind, so daß nachstehend nur auf die Konstruktion einer der beiden Seitenwände 13 eingegangen wird. Die Seitenwand 13 weist, gemäß Figur 1, eine Stirnkante 32 auf, die sich an dem Ende des Gehäuseunterteils 3 befindet, von dem der befestigte Endbereich 20 des Spannbands 9 ausgeht. Der Stirnkante 32 liegt -am anderen Ende des Gehäuseunterteils 3- eine Stirnkante 33 gegenüber. Parallel zur Unterseite 17 des Gehäusebodens 11 verläuft eine Oberkante 34 der Seitenwand 13. Die Seitenwand 13 wird von drei Ausnehmungen 35, 36 und 37 durchsetzt, wobei die Ausnehmung 35 als Winkelschlitz 38 ausgebildet ist, die Ausnehmung 36 einen Längsschlitz 39 bildet und die Ausnehmung 37 als randoffene Ausnehmung 40 ausgebildet ist. Die randoffene Ausbildung der Ausnehmung 37 ergibt sich durch einen in diese mündenden Schlitz 41, der von der Stirnkante 32 der Seitenwand 13 ausgeht. Die Grundstruktur der Ausnehmung 37 ist ebenfalls in Form eines Längsschlitzes 42 gestaltet, so daß zwischen den beiden Ausnehmungen 36 und 37 ein Spannkraft-Anzeigesteg 43 ausgebildet wird. Der Spannkraft-Anzeigesteg 43 verläuft etwa rechtwinklig zur Ebene des Gehäusebodens 11; vorzugsweise ist er geringfügig mit seinem oberen Ende in Richtung auf die Stirnkante 33 geneigt.

Der Winkelschlitz 38 besitzt einen, etwa parallel zum Gehäuseboden 11 verlaufenden, ersten Schlitzabschnitt 44 und einen, sich quer dazu erstreckenden, zweiten Schlitzabschnitt 45. Der erste Schlitzabschnitt 44 weist -vom Eckbereich des Winkelschlitzes 38 ausgehend- in Richtung auf die Stirnkante 33; in entsprechender Weise weist der zweite Schlitzabschnitt 45 in Richtung auf die Oberkante 34 der Seitenwand 13.

Das Gehäuseoberteil 5 ist -im Querschnitt zur Spannschnecken-Längsrichtung gesehen- bogenförmig gestaltet, das heißt, es umschließt teilweise die Spannschnecke 7. Dies geht besonders deutlich aus der Figur 4 hervor. Aufgrund des teilweisen Umgreifens der Spannschnecke 7 wird somit von dem Gehäuseoberteil 5 eine Teilumschließungskontur 46 gebildet. Diese Teilumschließungskontur 46 weist -beidseitig zur Längserstreckung der Spannschnecke 7 gesehen- Endkanten 47 auf, die Seitenränder 48 des Gehäuseoberteils 5 bilden. Ferner besitzt das Gehäuseoberteil 5 eine erste Stirnwand 49 sowie eine zweite Stirnwand 50. Die Stirnwände 49 und 50 sind mit randoffenen Lageröffnungen 51 versehen, in denen Lagerabschnitte 52 der Spannschnecke 7 drehbar lagern. Die Anordnung ist derart getroffen, daß zwischen der Unterseite 53 des Gehäuseoberteils 5 und dem Schneckengang 30 der Spannschnecke 7 ein geringer Freiraum 54 verbleibt (Figur 4). Nach einem anderen, nicht dargestellten Ausführungsbeispiel kann jedoch auch vorgesehen sein, daß der Schneckengang 30 an der Unterseite 53 des Gehäuseoberteils 5 anliegt.

Angrenzend an die Stirnwände 49 und 50 gehen von den Seitenrändern 48 des Gehäuseoberteils 5 Befestigungslappen 55 und 56 aus, wobei sich die beiden Befestigungslappen 55, im Hinblick auf die gedachte Längsmittelebene 31, diametral gegenüberliegen. Entsprechendes gilt für die beiden Befestigungslappen 56. Die Befestigungslappen 55 sind der Stirnwand 50 und die Befestigungslappen 56 der Stirnwand 49 zugeordnet. Die Befestigungslappen 55 und 56 verlaufen, hinsichtlich der walzenförmigen Spannschnecke 7, in radialer Richtung, wobei ihre Ebenen etwa parallel zum Gehäuseboden 11 verlaufen. Die beiden Befestigungslappen 56 durchgreifen die Winkelschlitze 38; die beiden Befestigungslappen 55 können in die Schlitze 41 und damit in die Ausnehmungen 37 bei entsprechenden Stellung des Gehäuseoberteils 5 eingebracht werden. Hierauf wird nachstehend noch näher eingegangen. Aus der Figur 4 ist erkennbar, daß die Befestigungslappen 55 und 56 nach unten, also in Richtung auf den Gehäuseboden 11, weisende abgewinkelte Endbereiche 57 aufweisen, die beabstandet zu den Außenseiten 58 der Seitenwände 13 verlaufen.

Die Spannschnecke 7 weist -angrenzend an ihren einen Lagerabschnitt 52- einen Betätigungskopf 59 auf. Dieser grenzt somit an die Stirnwand 50 des Gehäuseoberteils 5 an. Der Betätigungskopf 59 weist Mittel zum Ansetzen eines Werkzeugs, beispielsweise einen Schraubendreherschlitz und/oder eine Mehrkantanordnung für einen Steckschlüssel oder dergleichen, auf.

Nachfolgend wird auf in der Seitenwand 13 eingebrachte Materialversteifungen näher eingegangen.

In Figur 1 weist jede Seitenwand 13 eine Prägung 63 auf, die als Sicke 64 ausgebildet ist, wobei sie von innen nach außen geprägt ist, das heißt, die jeweilige Außenseite 67 der Seitenwand 13 weist eine Erhebung auf. Die Sicke 64 verläuft im wesentlichen auf einer gedachten Linie zwischen der Stirnkante 33 und der Oberkante 34. Alternativ kann die Sicke 64 auch parallel oder etwa parallel zur Oberkante 34 oder zur Stirnkante 33 verlaufen.

Ferner ist der Oberrand 65 des ersten Schlitzabschnitts 44 des Winkelschlitzes 38 mit einer materialverfestigenden Kantenprägung 66 versehen. Ebenso ist an der oberen Abschlußkante 68 des Schlitzes 41 eine Kantenprägung 66 ausgebildet. Das Querprofil der Kantenprägung 66 ist deutlich in der Figur 4 an der linken Seitenwand 13 ersichtlich. Die Kantenprägung 66 ist durch von der Außenseite 67 erfolgte, die Blechstärke verringernde Materialstauchung gebildet. Es wird darauf hingewiesen, daß der Einfachheit halber in der Figur 4 zwei Ausführungsbeispiele der Materialversteifung dargestellt sind. An der linken Seitenwand ist -wie bereits erwähnt- die Kantenprägung 66 ausgeführt. Dies ist bei dem ersten Ausführungsbeispiel an beiden Seitenwänden 13 realisiert. Beim zweiten Ausführungsbeispiel ist jede Seitenwand 13 mit einer Abkantung 69 versehen, wie sie aus der Figur 4 an der rechten Seitenwand 13 ersichtlich ist. Sinngemäß gilt dies auch für Figur 3.

Die Abkantung 69 wird durch einen von der Seitenwand 13 abgebogenen Materialüberstand 70 gebildet. Dieser Materialüberstand 70 ist sowohl im Bereich des Winkelschlitzes 38 und auch im Bereich des Schlitzes 41 realisiert. Hierzu werden beim Stanzen des Winkelschlitzes 38 Freischnitte erzeugt und der so freigeschnittene Materiallappen nach außen, vorzugsweise um 90°, abgebogen, wodurch der Materialüberstand 70 erzeugt wird. Beim Schlitz 41 wird zur Erzeugung des Materialüberstands 70 dessen Oberkante nach außen, ebenfalls vorzugsweise um 90°, abgebogen.

Die Figuren verdeutlichen, daß sich die Befestigungslappen 56 des Gehäuseoberteils 5 der Schlauchschelle 1 im ersten Ausführungsbeispiel der Materialverfestigung an der Kantenprägung 66 des Winkelschlitzes 38 und die Befestigungslappen 55 des Gehäuseoberteils 5 an einer weiteren Kantenprägung 66 des Schlitzes 41 abstützen. Durch die materialverfestigende Wirkung der Kantenprägungen 66 können hohe Kräfte von den Befestigungslappen 55 und 56 übertragen werden, ohne daß es zu einer Verformung der Seitenwände 13 kommt.

Ist die Materialversteifung mit den Abkantungen 69 ausgeführt, wird eine geringere Flächenpressung zwischen den Befestigungslappen 55 und 56 und den Materialüberständen 70 erzielt, da die Auflageflächen der Bauteile vergrößert sind.

Bei einer Ausbildung der Sicke 64 in den Seitenwänden 13 ergibt sich die Möglichkeit, die Blechstärke des Gehäuseunterteils 3 der Schlauchschelle 1 zu reduzieren, was zu einer Materialeinsparung und folglich zu niedrigeren Kosten führt. Gleiches gilt für die Ausgestaltung mit der Kantenprägung 66 oder der Abkantung 69.

Es ergibt sich folgende Funktion: Es wird davon ausgegangen, daß sich die Schlauchschelle 1 in ihrem geöffneten Zustand befindet, das heißt, das Gehäuseoberteil 5 ist relativ zum Gehäuseunterteil 3 in eine Stellung, gemäß Figur 1, verschwenkt, in der die Spannschnecke 7 Außereingriff zum Spannband 9 steht. Das Spannband 9 wird um einen nicht dargestellten Gegenstand gelegt und anschließend der Endbereich 28 in das Gehäuseunterteil 3, gemäß der Darstellung der Figur 1, eingefädelt. Danach wird nun das Gehäuseoberteil 5 aus der, in Figur 1, gezeigten Stellung herunter in das Gehäuseunterteil 3 hineingeklappt. Bei dieser Klappbewegung gleiten die Befestigungslappen 56 aus zweiten Schlitzabschnitten 45 der beiden Winkelschlitze 38 heraus und treten in die ersten Schlitzabschnitte 44 ein. Mit ihren Seitenkanten 60 passieren die beiden Befestigungslappen 55 die Stirnkante 32 und treten dann in die Schlitze 41 ein. Das Gehäuseoberteil 5 wird soweit in Richtung auf die Stirnkanten 33 des Gehäuseunterteils 3 verschoben, bis die beiden Seitenkanten 60 gegen den Spannkraft-Anzeigesteg 43 treten. Im Zuge der Montagearbeiten ist es selbstverständlich möglich, daß während der Manipulationen am Spannband 9 noch geringfügige Verschiebungen des Gehäuseoberteils relativ zum Gehäuseunterteil stattfinden, da die Schlauchschelle 1 ja noch nicht festgespannt ist. Der vorstehend erläuterte Montageschritt führt zu einer Position der Teile der Schlauchschelle 1, wie sie sich aus der Figur 2 ergibt. In dieser Position greift der Schneckengang 30 in die Eingriffsschlitze 29, wobei dieser Eingriff sehr tief erfolgen kann, da der Schneckengang-Freilaufdurchbruch 24 eine sehr tiefliegende Spannschneckenposition gestattet, das heißt, die Drehachse 61 (Längsmittelachse) der Spannschnecke 7 liegt entsprechend nahe dem Gehäuseboden 11 gegenüber.

Im Zuge der weiteren Montagearbeiten wird nun mittels eines Werkzeuges die Spannschnecke 7 im Uhrzeigersinn gedreht, wodurch das Spannband 9 festgezogen wird, das heißt, es legt sich mit seiner Spannkraft um den erwähnten Gegenstand herum. Die Spannkraft wird in den Gehäuseboden 11 des Gehäuseunterteils 3 eingeleitet, da dort der Endbereich 20 des Spannbands -wie vorstehend erwähnt- festgelegt ist. Der andere Endbereich 28 des Spannbands 9 wirkt über die Eingriffsschlitze 29 mit der Spannschnecke 7 zusammen, das heißt, die Spannkraft wird dort in die Spannschnecke 7 geleitet und über die Stirnwand 49 auf das Gehäuseoberteil 5 und von dort zu den Befestigungslappen 55 übertragen, die sich mit ihren Seitenkanten 60 an den Spannkraft-Anzeigestegen 43 abstützen. Da die Spannkraft-Anzeigestege 43 durch das Festziehen der Schlauchschelle 1 plastisch verformt werden, stellt ihre Verformung ein Maß für die Spannkraft dar, das heißt, sie dienen als Anzeige für die von der Schlauchschelle 1 aufgebrachte Spannkraft. Die Verformung kann derart stark erfolgen, daß sich die Spannkraft-Anzeigestege 43 an die gegenüberliegenden Seitenkanten 62 der Ausnehmungen 36 anlegen.

Insbesondere ist es den Figuren 2 und 3 zu entnehmen, daß sich die Befestigungslappen 55 und auch die Befestigungslappen 56 in einer relativ nahe zum Gehäuseboden 11 liegenden Position befinden. Dies wird dadurch erzielt, daß sich die Befestigungslappen 55 und 56 etwa auf der Höhe der Längsmittelachse 61 der Spannschnecke 7 befinden. Es wird deutlich, daß -je nach Umschlingungswinkel des Gehäuseoberteils 5- um die Spannschnecke 7 herum eine mehr oder weniger tiefe Lage der Befestigungslappen 55 und 56 erzeugt wird. Je tiefer die Befestigungslappen 55 und 56 liegen, um so kleiner ist der Abstand zwischen den Kraftangriffspunkten und dem Gehäuseboden 11, um so geringer ist das durch Festziehen der Schlauchschelle 1 wirkende Drehmoment. Dies alles führt dazu, daß mit der erfindungsgemäßen Schlauchschelle 1 extrem hohe Spannkräfte aufgebracht werden können.

Nach einer Weiterbildung der Erfindung kann vorgesehen sein, daß im vollständig festgezogenen Zustand der Schlauchschelle 1 nicht nur die Befestigungslappen 55 gegen entsprechende Teile des Gehäuseunterteils treten, sondern daß sich auch die Befestigungslappen 56 mit ihren Randkanten am Gehäuseunterteil 3 abstützen, so daß ein noch festerer Verbund realisiert wird, wobei dann jedoch die Anzeige mittels der Spannkraft-Anzeigestege 43 ungenau wird.

Sofern nach einer Montage eine Demontage der erfindungsgemäßen Schlauchschelle erfolgen soll, ist es lediglich erforderlich, die Spannschnecke 7 in Löserichtung zu drehen. Sobald das Spannband 9 hinreichend gelockert ist, werden die Befestigungslappen 55 aus den Schlitzen 41 herausgezogen, und es kann ein Aufklappen erfolgen, so daß sich die Position gemäß Figur 1 einstellt. In dieser Position ist es problemlos möglich, den Endbereich 28 des Spannbands 9 aus dem Gehäuseunterteil 3 herauszuziehen, da kein Eingriff mehr mit der Spannschnecke 7 besteht.

## Patentansprüche

1. Schlauchschelle mit einem U-förmigen Gehäuseunterteil (3), an dessen Gehäuseboden (11) ein Endbereich (20) eines Spannbands (9) befestigbar ist, und mit einem Gehäuseoberteil (5), das zum Ineingriff- oder Außereingriffbringen einer Spannschnecke (7) mit dem anderen Endbereich (26) des Spannbands (9) schwenkbar im Gehäuseunterteil (3) gelagert ist, wobei die Spannschnecke (7) im Gehäuseoberteil (5) drehbar, jedoch axial unverschiebbar gelagert ist und das Gehäuseoberteil (5) einstückige Befestigungslappen aufweist, die in Ausnehmungen von Schenkel des U-förmigen Gehäuseunterteils (3) bildenden Seitenwänden vom Innern des Gehäuseunterteils (3) her eingreifen beziehungsweise in Eingriff bringbar sind, wobei zwei, einander hinsichtlich der Drehachse (61) diametral gegenüberliegende Befestigungslappen (56) jeweils in eine der Ausnehmungen (35) eingreifen, die als Winkelschlitze (38) ausgebildet sind, jeder Winkelschlitz (38) einen etwa parallel zum Gehäuseboden (11) verlaufenden, ersten Schlitzabschnitt (44) und einen quer dazu verlaufenden, zweiten Schlitzabschnitt (45) aufweist und zwei weitere, einander hinsichtlich der Drehachse (61) diametral gegenüberliegende Befestigungslappen (55) jeweils in eine der Ausnehmungen (37) eingreifen, die als randoffene Ausnehmungen (40) ausgebildet sind, wobei das Gehäuseoberteil (5), im Querschnitt zur Spannschnecken-Längserstreckung gesehen, die Spannschnecke (7) teilweise umschließt und von Seitenränder (48) des Gehäuseoberteils (5) bildenden, zumindest etwa in Spannschnecken-Längsrichtung verlaufenden Endkanten (47) der gebildeten Teilumschließungskontur (46) die Befestigungslappen (55,56) ausgehen.

2. Schlauchschelle nach Anspruch 1, **dadurch gekennzeichnet, daß** die Teilumschließungskontur (46) zumindest etwa der Umfangsquerschnittskontur der Spannschnecke (7) in der Formgebung angepaßt ist.

3. Schlauchschelle nach einem der vorhergehenden Ansprüche, **dadurch gekennzeichnet, daß** die Befestigungslappen (55,56) etwa auf der Höhe der Drehachse (61) der Spannschnecke (7) liegen.

4. Schlauchschelle nach einem der vorhergehenden Ansprüche, **dadurch gekennzeichnet, daß** die randoffenen Ausnehmungen (37) an Stirnkanten (32) des U-förmigen Gehäuseunterteils (3) ausgebildet sind.

5. Schlauchschelle nach einem der vorhergehenden Ansprüche, **dadurch gekennzeichnet, daß** der am Gehäuseboden (11) befestigbare Endbereich (20) des Spannbands (9) einen Schneckengangs-Freilaufdurchbruch (24) aufweist.

6. Schlauchschelle nach einem oder mehreren der vorhergehenden Ansprüche, **dadurch gekennzeichnet, daß** die Seitenwände (13) des Gehäuseunterteils (3) mit versteifenden Sicken (64) versehen sind.

7. Schlauchschelle nach einem oder mehreren der vorhergehenden Ansprüche, **dadurch gekennzeichnet, daß** sich die Befestigungslappen (55,56) an Kantenprägungen (66) oder Abkantungen (69) der Winkelschlitze (38) beziehungsweise Schlitze (41) abstützen.

## Claims

1. Hose clamp having a U-shaped lower housing part (3), to the housing base (11) of which an end region (20) of a tensioning strap (9) can be attached, and having an upper housing part (5) which is mounted in a swivelling manner with the other end region (26) of the tensioning strap (9) in the lower housing part (3) for engagement or disengagement of a tensioning worm (7), the tensioning worm (7) being mounted rotatably in the upper housing part (5) but in an axially undisplaceable manner, and the upper housing part (5) having integral attachment tabs which engage or can be brought to engage in recesses of side walls, which form legs of the U-shaped lower housing part (3), from the direction of the interior of the lower housing part (3), two attachment tabs (56), which are situated diametrically opposite each other with respect to the axis of rotation (61), respectively engaging in one of the recesses (35) which are configured as angle slots (38), each angle slot (38) having a first slot portion (44) which extends approximately parallel to the housing base (11) and a second slot portion (45) which extends transversely thereto and two further attachment tabs (55), which are situated diametrically opposite each other with respect to the axis of rotation (61), respectively engaging in one of the recesses (37) which are configured as open-edge recesses (40), the upper housing part (5), observed in cross-section relative to the longitudinal extension of the tensioning worm, partially encompassing the tensioning worm (7) and the attachment tabs (55, 56) starting from end edges (47) of the formed partially encompassing contour (46), which end edges form side edges (48) of the upper housing part (5) and extend at least approximately in the longitudinal direction of the tensioning worm.

2. Hose clamp according to claim 1, **characterised in that** the partially encompassing contour (46) is adapted in configuration at least approximately to the circumferential cross-sectional contour of the tensioning worm (7).

3. Hose clamp according to one of the preceding claims, **characterised in that** the attachment tabs (55, 56) are situated approximately at the height of the axis of rotation (61) of the tensioning worm (7).

4. Hose clamp according to one of the preceding claims, **characterised in that** the open-edge recesses (37) are configured on the front edges (32) of the U-shaped lower housing part (3).

5. Hose clamp according to one of the preceding claims, **characterised in that** the end region (20) of the tensioning strap (9), which region can be attached to the housing base (11), has a worm thread free-running opening (24).

6. Hose clamp according to one or more of the preceding claims, **characterised in that** the side walls (13) of the lower housing part (3) are provided with reinforcing beads (64).

7. Hose clamp according to one or more of the preceding claims, **characterised in that** the attachment tabs (55, 56) are supported on edge embossings (66) or bent-over portions (69) of the angle slots (38) or slots (41).

## Revendications

1. Collier de serrage avec une partie inférieure de boîtier (3) en forme de U sur le fond (11) de laquelle peut être fixée une partie terminale (20) d'une bande de tension (9), et avec une partie supérieure de boîtier (5) montée pivotante dans la partie inférieure du boîtier (3) pour mettre en prise ou hors prise une vis de tension (7) avec l'autre zone terminale (26) de la bande de tension (9), la vis de tension (7) étant montée rotative, mais non mobile en direction axiale dans la partie supérieure (5), cette partie supérieure de boîtier (5) comportant des pattes de fixation d'une seule pièce, venant en prise à partir de l'intérieur de la partie inférieure de châssis en forme de U (3), ou pouvant être mises en prise dans des cavités des parois latérales formant les ailes du boîtier (3) en U, dont deux pattes de fixation (56), diamétralement opposées par rapport à l'axe de rotation (61) s'emboîtent respectivement dans l'une des cavités (35), formées comme des entailles angulaires (38), chacune de ces entailles angulaires (38) comportant une première section d'entaille (44), pratiquement parallèle au fond (11) du boîtier, et une deuxième section d'entaille (45) perpendiculaire à la première, et dont deux autres pattes de fixation (55) diamétralement opposées par rapport à l'axe de rotation (61) s'emboîtent respectivement dans une des cavités (37), formées comme des cavités à bords ouverts (40), la partie supérieure de boîtier (5), vue en section dans le sens de la dimension longitudinale de la vis de tension (7), entourant partiellement cette vis de tension, alors que les pattes de fixation (55, 56) dépassent des bords extérieurs (47) du contour de l'entourage partiel (46) qui forment les bords latéraux (48) de la partie supérieure (5) du boîtier, et qui s'étendent au moins approximativement en direction longitudinale de la vis de tension.

2. Collier de serrage selon la revendication 1,
**caractérisé en ce que**
le contour d'entourage partiel (46) est adapté au moins à peu près au contour périphérique transversal de la vis de tension (7).

3. Collier de serrage l'une des revendications précédentes,
**caractérisé en ce que**
les pattes de fixation (55, 56) sont situées environ à la hauteur de l'axe de rotation (61) de la vis de serrage (7).

4. Collier de serrage selon l'une des revendications précédentes,
**caractérisé en ce que**
les cavités à bords ouverts (37) sont réalisées sur des bords frontaux (32) de la partie inférieure (3) en forme de U.

5. Collier de serrage selon l'une des revendication précédentes,
**caractérisé en ce que**
la zone d'extrémité (20) de la bande de tension (9) fixée sur le fond (11) du boîtier comporte un perçage (24) permettant un mouvement libre de la vis de tension.

6. Collier de serrage selon une ou plusieurs des revendications précédentes,
**caractérisé en ce que**
les parois latérales (13) de la partie inférieure (3) de boîtier sont munies de renforts (64).

7. Collier de serrage selon une ou plusieurs des revendications précédentes,
**caractérisé en ce que**
les pattes de fixation (55, 56) s'appuient sur des parties amincies (66) ou des replis (69) des arêtes des entailles angulaires (38) ou des entailles (41).
